# EUROPÄISCHE PATENTSCHRIFT

(11) **EP 1 572 504 B1**
(45) Veröffentlichungstag und Bekanntmachung des Hinweises auf die Patenterteilung: **07.06.2006**
(21) Anmeldenummer: 03767721.8
(22) Anmeldetag: 02.12.2003
(51) Int. Cl.: B60R 21/34, B62D 25/12, B62D 25/10

(54) **MOTORHAUBE MIT FUSSGÄNGERSCHUTZ**
ENGINE HOOD COMPRISING A PROTECTIVE DEVICE FOR PEDESTRIANS
CAPOT MOTEUR COMPORTANT UN SYSTEME DE PROTECTION DES PIETONS

(30) Priorität: 19.12.2002 DE 10259591
(43) Veröffentlichungstag der Anmeldung: 14.09.2005
(73) Patentinhaber: DaimlerChrysler AG, 70567 Stuttgart (DE)
(72) Erfinder: BEHR, Robert, 73061 Ebersbach (DE); GRÜNBAUM, Martin, 71069 Sindelfingen (DE); LANGE, Dieter, 71106 Magstadt (DE)
(86) Internationale Anmeldenummer: PCT/EP2003/013551
(87) Internationale Veröffentlichungsnummer: WO 2004/056619

(56) Entgegenhaltungen:
- EP-A- 1 093 980
- WO-A-02/47961
- DE-U- 29 601 143
- PATENT ABSTRACTS OF JAPAN vol. 017, no. 527 (M-1484), 22. September 1993 (1993-09-22) -& JP 05 139338 A (NISSAN MOTOR CO LTD), 8. Juni 1993 (1993-06-08)

## Beschreibung

Die Erfindung geht aus von einer Motorhaube für Kraftfahrzeuge, die zum Schutz von Fußgängern bei einer Kollision mit dem Kraftfahrzeug mit einer deformierbaren Kopfaufprallzone versehen ist, gemäß dem Oberbegriff des Anspruchs 1, wie sie beispielsweise aus der EP 1 093 980 A1 oder der WO 02/47961 A (entspricht der EP-A-1357018) als bekannt hervorgeht.

Bei Kollisionen eines Fußgängers mit einem Fahrzeug, insbesondere bei einem Frontalaufprall, trifft der Fußgänger oftmals mit seinem Oberkörper oder seinem Kopf auf die Motorhaube des Fahrzeugs auf, was zu schweren Verletzungen des Fußgängers führen kann. Zur Reduktion dieses Verletzungsrisikos muß der potentielle Aufschlagbereich des Fußgängers auf der Motorhaube möglichst nachgiebig und verformbar sein. Allerdings steht zwischen Motorhaube und den Aggregaten nur ein sehr kleiner Freiraum zur Verfügung, so daß der Deformationsweg, um den die Motorhaube im Fall einer Kollision mit einem Fußgänger nachgeben kann, nur sehr gering ist. Weiterhin muß die Motorhaube zum Schutz der Fahrzeuginsassen bei einem Frontalaufprall vorgegebene Anforderungen in bezug auf die Bauteilsteifigkeit erfüllen und so gestaltet sein, daß durch Zusammenstauchen der Motorhaube in Fahrzeug-Längsrichtung eine definierte Deformation und somit eine gezielte Energieumsetzung erfolgt.

Um diesen widersprüchlichen Anforderungen gerecht werden zu können, wird die Motorhaube vielfach als Zusammenbau einer (die Beplankung bildenden) Außenschale und einer unterhalb der Au-ßenschale angeordneten Verstärkungsschale gestaltet, welche mit geeigneten Deformations- und Versteifungselementen versehen ist. Aus der gattungsbildenden EP 1 093 980 A1 ist beispielsweise eine Motorhaube mit einer Außen- und einer Verstärkungsschale bekannt, deren Biegesteifigkeit über die Motorhaube hin- weg in einer solchen Weise variiert, daß die Motorhaube in der Mitte eine relativ hohe Biegesteifigkeit aufweist, während in den Randbereichen eine geringere Biegesteifigkeit vorliegt. Durch diese Konstruktion soll gewährleistet werden, daß bei einem mittigen Kopfaufprall die gesamte Masse der Motorhaube dem Aufprall entgegenwirkt, während bei einem Kopfaufprall in den Randbereichen die Energie des Kopfaufpralls auf einen kleinen Teil der Motorhaube geleitet wird. Die aus der EP 1 093 908 A1 bekannte Konstruktion der Motorhaube zielt somit darauf ab, unabhängig vom Aufprallort eine in etwa gleichbleibende Verformung der Motorhaube zu erreichen.

Aktuelle Erkenntnisse zeigen jedoch, daß bei der Beurteilung der Auswirkungen einer Kollision eines Fußgängers mit der Motorhaube nicht nur die Durchbiegung der Motorhaube, sondern vielmehr auch die Beschleunigung bzw. das Abbremsen des auftreffenden Körpers, also die auf den Körper wirkenden Kräfte, eine_wichtige Rolle spielen. Zusätzlich muß nach wie vor zwischen Motorhaube und den Aggregaten ein möglichst großer Freiraum zur Verfügung stehen, so daß die Motorhaube im Fall einer Kollision mit einem Fußgänger um einen möglichst großen Deformationsweg nachgeben kann, bevor sie auf die (im allgemeinen sehr harten) Aggregate auftrifft.

Der Erfindung liegt somit die Aufgabe zugrunde, die aus der EP 1 093 980 B1 bekannte Motorhaube in einer solchen Weise weiterzuentwickeln, daß bei Kollisionen von Fußgängern mit dem Fahrzeug ein möglichst homogenes Kraftniveau über die Motorhaube hinweg erreicht wird. Gleichzeitig soll - bei fest vorgegebener Gestalt des Motorblocks und der Außenbeplankung - ein möglichst großer Verformungsweg erreicht werden, den die Motorhaube im Fall einer Kollision eines Fußgängers mit dem Fahrzeug zurückweichen kann, ohne auf den Motorblock aufzuprallen.

Die Aufgabe wird erfindungsgemäß durch die Merkmale des Anspruchs 1 gelöst.

Danach ist die Motorhaube als Verbundteil aus einer Innen- und einer Außenschale gestaltet, wobei die Innenschale einen Versteifungsbereich aufweist ist, der mit einer Wölbstruktur vesehen ist. Unter einem "wölbstrukturierten" Bauteilbereich wird hierbei ein Bauteilbereich verstanden, der mit einer versteifenden Makrostruktur versehen ist welche mit Hilfe eines Beulverfahrens in das für die Herstellung des Bauteils verwendete Halbzeug eingebracht wird. Das zur Erzeugung solcher beulstrukturierter Halbzeuge zum Einsatz kommende Verfahren ist beispielsweise in der DE 44 37 986 A1 beschrieben.

Im Gegensatz zu der Wirkung klassischer Umformverfahren (wie z.B. Walzenprägen oder Hydroforming), bei denen während des Umformens eine Plastifizierung des Ausgangsmaterials stattfindet, wird das Halbzeug beim Wölbstrukturieren lediglich lokal gefaltet; dieser Prozeß ist verbunden mit einer nur unwesentlichen Oberflächenvergrößerung des Materials. Die Beulverformung erfolgt in einem Durchlaufverfahren, so daß gesamte Materialbahnen (bzw. bandartige Bereiche auf ihnen) mit der Wölbstruktur versehen werden.

Zur Herstellung der Innenschale der Motorhaube wird aus der wölbstrukturierten Materialbahn ein Rohling ausgeschnitten, aus dem dann durch weitere Prozeßschritte die Innenschale geformt wird. Alternativ kann aus dem wölbstrukturierten Halbzeug ein Einsatzteil ausgeschnitten werden, das in bezug auf seine Größe und Gestalt dem Versteifungsbereich der Innenschale angepaßt ist; dieses Einsatzteil wird in einem weiteren Prozeßschritt in eine hierfür vorgesehene Aussparung in der konventionell (z.B. durch Tiefziehen) aus einer unstrukturierten Blechplatine geformten Innenschale eingesetzt und mit dieser verbunden.

Die Wölbstrukturierung geht einher mit einer erheblichen Steifigkeitserhöhung des betreffenden Halbzeugs und des daraus gefertigten Bauteils. Im Unterschied zu der (beispielsweise aus der EP 1 093 980 A1) bekannten Vorgehensweise, die Innenschale mit steifigkeitserhöhenden Versickungen zu versehen, hat die Wölbstrukturierung den Vorteil, eine weitgehend richtungsunabhängige Steifigkeitserhöhung zu bewirken. Durch einen wölbstrukturierten Versteifungsbereich der Innenschale, der Großteile des Aufprallbereichs überspannt, können somit eine näherungsweise richtungsunabhängige, konstante Steifigkeit und Massenverteilung der Innenschale im Aufprallbereich erreicht werden. Dadurch wird ein homogenes Kraftniveau bzw. Energieaufnah-meverhalten über den gesamten wölbstrukturierten Bereich der Motorhaube hinweg gewährleistet.

Wölbstrukturierte Bauteile zeichnen sich im Crashfall durch eine hohe Energieaufnahme und eine regelmäßige reproduzierbare Verformung aus. Dies spielt eine wichtige Rolle für den Schutz de Fahrzeuginsassen bei einem Frontalaufprall, da die erfindungsgemäße Gestaltung der Innenschale mit wölbstrukturiertem Verformungsbereich ein wohldefiniertes Zusammenstauchen der Motorhaube in Fahrzeug-Längsrichtung und somit eine gezielte Energieumsetzung ermöglicht.

Ein weiterer Vorteil der Erfindung besteht in der Tatsache, daß die im Zuge der Wölbstrukturierung in eine Materialbahn eingebrachten Beulen - verglichen mit den herkömmlicherweise eingeprägten Sicken - eine sehr geringe Höhe haben. Das hat zur Folge, daß die effektive Bauteildicke des wölbstrukturierten Versteifungsbereichs der Motorhauben-Innenschale wesentlich geringer ist als die effektive Bauteildicke herkömmlicher versickter Innenschalen. Diese Einsparung in der effektiven Bauteildicke führt dazu, daß die erfindungsgemäße Innenschale gegenüber herkömmlichen Innenschalen wesentlich weniger Raum einnimmt, so daß zwischen dem Motorblock und der Beplankung (Außenschale) der Motorhaube ein größerer Freiraum verbleibt, der als Deformationsweg der Motorhaube im Fall einer Kollision eines Fußgängers-mit dem Fahrzeug genutzt werden kann.

Zusammengefaßt ergeben sich durch die erfindungsgemäße Gestaltung der Motorhaube mit einer bereichsweise wölbstrukturierten Innenschale somit wesentliche Vorteile gegenüber einer herkömmlichen versickten Innenschale, nämlich
- ein sehr homogenes Kraftniveau und somit ein sehr homogenes Energieaufnahmeverhalten im wölbstrukturierten Bereich der Motorhaube, und
- eine geringe effektive Dicke der Innenschale im Bereich des Motorblocks und somit ein größerer freier Deformationsweg der Motorhaube im Kollisionsfall.

Der wölbstrukturierte Versteifungsbereich überspannt zweckmäßigerweise großflächig den gesamten Mittelbereich der Innenschale, der im Fahrzeug oberhalb der Aggregate des Motorraums gelegen ist. Entlang der Seitenbereiche und im Frontbereich, wo für die Scharniere bzw. die Auflager zusätzliche Verstärkungen der Innenschale vorgesehen werden müssen, weist die Innenschale statt der (richtungsunabhängigen) Wölbstrukturierung eine gezielte, den Gegenlagern auf der Karosserie angepaßte und mit Zusatzelementen verstärkte Versteifungsstruktur auf.

Gemäß einer vorteilhaften Ausgestaltung der Erfindung ist der Versteifungsbereich der Innenschale durch ein näherungweise ebenes wölbstrukturiertes Einsatzteil gebildet, das separat aus einem wölbstrukturierten Halbzeug gefertigt wird und im Zuge des Rohbaus in eine Aussparung in der (beispielsweise durch Tiefziehen gefertigten) Innenschale eingesetzt und mit dieser fest verbunden wird. Dieser Aufbau der Innenschale ist unter umformtechnischen Gesichtspunkten besonders günstig, da das wölbstrukturierte Einsatzteil separat gefertigt werden kann und nur geringe Glättungen bzw. Umformungen der Wölbstruktur notwendig sind.

Um das Einsatzteil mit Hilfe herkömmlicher, bewährter und großserientauglicher Verfahren - z.B. durch Punktschweißen und/oder durch Kleben - einfach an die Innenschale anbinden und dabei prozeßsicher eine hochfeste Verbindung sicherstellen zu können, wird die Wölbstruktur im Randbereich des Einsatzteils vorteilhafterweise geglättet. Auf diese Weise wird auf dem Einsatzteil ein randseitiger geglätteter Flansch erzeugt, der in Zusammenbaulage des Einsatzteils mit der Innenschale auf einem entsprechend geformten Flansch der Innenschale zu liegen kommt und mit diesem durch ein Fügeverfahren - vorzugsweise durch Kleben - verbunden wird. Das Glätten der Randbereiche des Einsatzteils erfolgt in besonders kostengünstiger Weise mit Hilfe eines Prägeverfahrens.

Vorteilhafterweise ist die Wölbstrukturierung des Versteifungsbereiches auf der Innenschale in einer solchen Weise ausgerichtet, daß die Beulen nach oben, also in Richtung der Außenschale, ausgewölbt sind. Um eine besonders homogene Steifigkeit und Festigkeit der Motorhaube im Aufprallbereich zu erreichen, werden die nach oben abragenden Kuppen der Beulen zweckmäßigerweise mit der Außenschale verklebt.

Im folgenden wird die Erfindung anhand eines in den Zeichnungen dargestellter Ausführungsbeispiels näher erläutert; dabei zeigen:
- Fig. 1: eine erfindungsgemäße Motorhaube in einer Explosionsdarstellung;
- Fig. 2: die Innenschale der Motorhaube der Figur 1 in einer Explosionsdarstellung;
- Fig. 3: eine schematische Schnittdarstellung durch einen Zusammenbau aus Außenschale und Innenschale, gemäß dem Schnitt III-III in Figur 1.

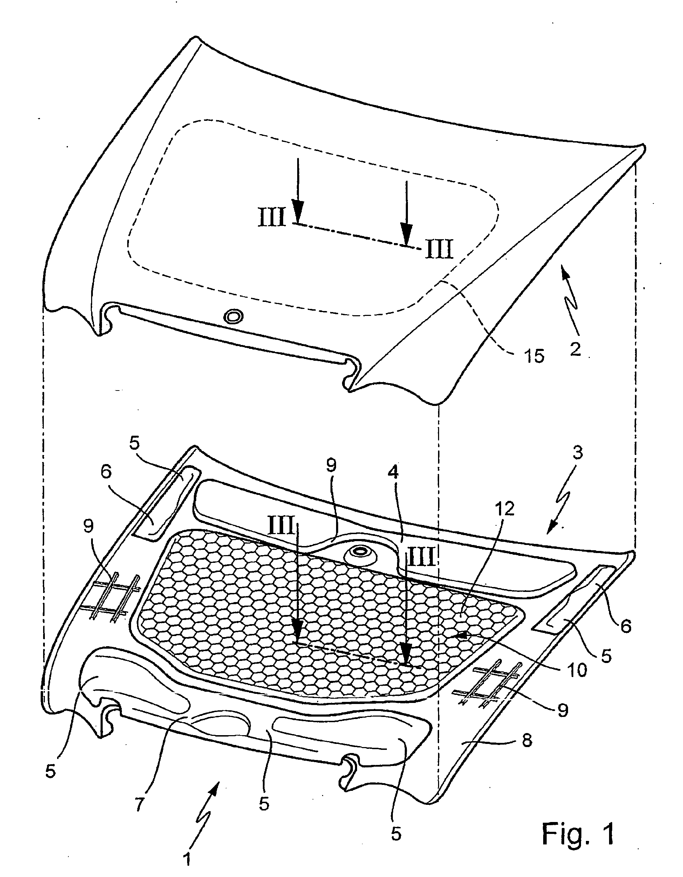

Figur 1 zeigt eine Explosionsdarstellung einer Motorhaube 1 mit einer Außenschale 2, die durch eine Innenschale 3 verstärkt ist. Beide Schalen 2,3 bestehen im vorliegenden Beispiel aus Metallblech; sie können jedoch im allgemeinen Fall auch teilweise oder vollständig aus anderen Werkstoffen, insbesondere aus faserverstärkten Kunststoffen, bestehen.

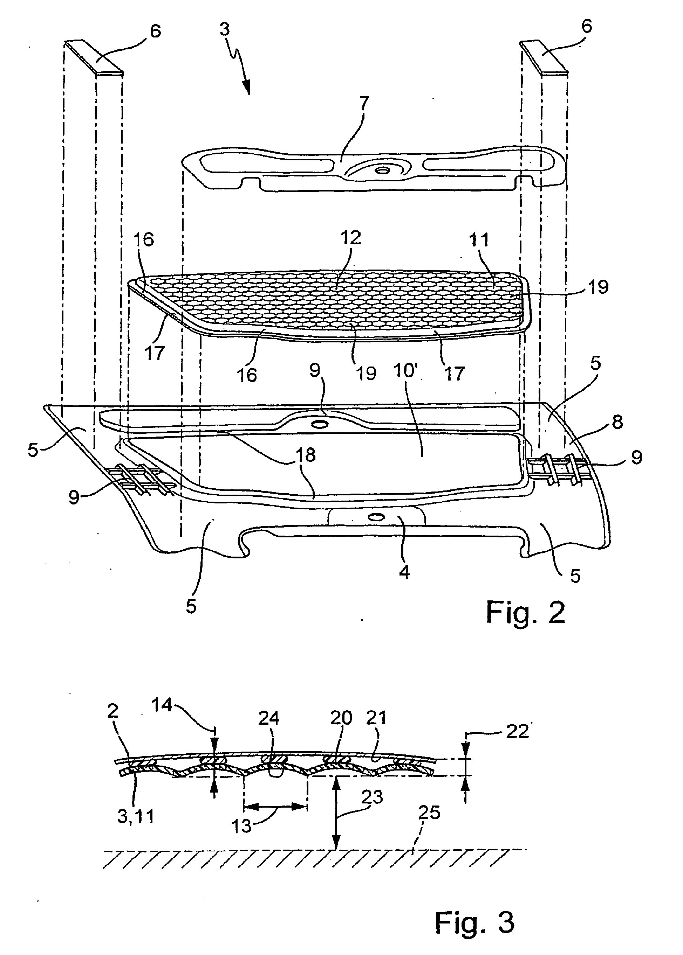

Die Außenschale 2 ist ein Tiefziehblech, welches im Rahmen des Rohbaus mit der Innenschale 3 verbunden wird. Die Innenschale 3 ist ein Verbundbauteil und umfaßt - wie aus der Explosionsdarstellung der Figur 2 ersichtlich - ein Basisteil 4, das in den Auflagerbereichen 5 durch zusätzliche Verstärkungsbleche - nämlich die Scharnierverstärkungen 6 und das vordere Versteifungsblech 7 - verstärkt ist. Das Basisteil 4 und die Verstärkungsteile 6,7 sind typischerweise Tiefziehteile aus Metallblech (Stahl, Alu). In den Auflagerbereichen 5 bzw. den Randbereichen 8 ist das Basisteil 4 mit Sicken 9 versteift. Im Inneren der Innenschale 3 ist weiterhin ein Versteifungsbereich 10 vorgesehen, welcher den Großteil des im Fahrzeug unterhalb der Motorhaube 1 gelegenen Aggregateraums 25 überspannt. In diesem Versteifungsbereich 10 weist das Basisteil 4 eine Aussparung 10' auf, in die unter Verwendung eines Klebeverfahrens ein Einsatzteil 11 eingefügt ist. Die Makrogeometrie des Einsatzteils 11 ist - wie aus Figuren 1 und 2 ersichtlich - näherungsweise eben, was eine flache Gestaltung der Motorhaube 1 gestattet.

Das Einsatzteil 11 wird aus einem wölbstrukturierten Rohling aus Metallblech hergestellt. Die Erzeugung der Wölbstruktur 12 auf dem Rohling erfolgt mit Hilfe eines Beulverfahrens, das beispielsweise in der DE 44 37 986 A1 im Detail beschrieben ist; durch dieses Beulverfahren wird aus einem ebenen Ausgangsblech ein wölbstrukturierter Einsatzteil-Rohling erzeugt. Da das Einbringen der Wölbstruktur 12 in einem Durchlaufverfahren erfolgt, weist der Einsatzteil-Rohling die Wölbstrukturierung 12 auf seiner gesamten Oberfläche auf. - Alternativ kann als Ausgangsmaterial zur Herstellung des Einsatzteils 11 auch ein Rohling verwendet werden, der - statt der vollständigen Wölbstrukturierung - nur in einem mittleren bandartigen Streifen (entsprechend der Vorschubrichtung des Beulverfahrens) mit einer Wölbstrukturierung versehen ist, während die benachbarten Randstreifen frei von Wölbstrukturen sind.

Die Wölbstruktur 12 des Einsatzteils 11 hat im vorliegenden Ausführungsbeispiel eine hexagonale Symmetrie, was in Figur 1 schematisch durch ein Wabenmuster angedeutet ist. Die Gitterkonstante 13 sowie die Wölbhöhe 14 der Wölbstruktur 12 ist dabei der Materialstärke sowie der gewünschten Steifigkeitserhöhung des Einsatzteils 11 angepaßt. Die optimale Form und Ausrichtung der Wölbstruktur 12 auf dem Einsatzteil 11 wird vorteilhafterweise in numerischen Festigkeitsuntersuchungen und Crashsimulationen der Motorhaube 1 bestimmt. Alternativ zu der gezeigten hexagonalen Wölbstruktur 12 kann das Einsatzteil 11 auch eine Wölbstruktur mit einer trigonalen oder einer rechteckigen Grundsymmetrie aufweisen. Da die Wölbstruktur 12 des Einsatzteils 11 hochsymmetrisch ist (im Fall der Figuren 1 und 2 in Form eines regelmäßigen hexagonalen Gitters), hat diese Wölbstruktur 12 eine näherungsweise richtungsunabhängige versteifende Wirkung auf das Einsatzteil 11. In unterschiedlichen Prüfzonen im Gebiet des vom Einsatzteil 11 überspannten (und in Figur 1 gestrichelt angedeuteten) Aufprallbereich 15 kann somit eine gleichbleibenden, vorgegebenen Kraftbelastung bzw. Abbremsung bei Aufprall eines Prüfkörpers auf die Motorhaube 1 erreicht werden. Gleichzeitig weist die Motorhaube 1 über den Aufprallbereich 15 hinweg ein homogenes Flächenträgheitsmoment auf.

Entlang seines Randes 16 ist das Einsatzteil 11 mit Anschlußzonen 17 versehen, welche weitgehend frei von Wölbstrukturen 12 sind und die Form von flachen Flanschen haben. In diesen Anschlußzonen 17 ist die ursprünglich vorliegende Wölbstruktur 12 des Einsatzteil-Rohlings durch ein Prägeverfahren geglättet. Die Anschlußzonen 17 sind so gestaltet, daß das Einsatzteil 11 mit Hilfe herkömmlicher Fügeverfahren (vorzugsweise durch Kleben, alternativ beispielsweise auch durch Punktschweißen) an das Basisteil 4 angebunden werden kann, welches im Überlappungsbereich mit den Anschlußzonen 17 ebenfalls näherungsweise flach ausgestaltet ist.

In einem Übergangsbereich 19 zwischen Anschlußzonen 17 und Wölbstruktur 12 können auf dem Einsatzteil 11 (in Figuren 1 und 2 nicht dargestellte) Sicken vorgesehen sein; solche Sicken dienen als "Verbraucher" des Materialüberschusses, welcher durch die Oberflächenvergrößerung im Zuge des Wölbstrukturierens entstanden ist und nun beim Glätten der Anschlußzonen 17 des Einsatzteils 11 gezielt abgeführt werden muß. Die Sicken sind in einer solchen Weise dimensioniert und angeordnet, daß sie einerseits eine Faltenbildung in der geglätteten Anschlußzone 17 unterbinden und andererseits Ausstrahlungen in die Wölbstruktur 12 des Einsatzteils 11 hinein vermeiden.

Nach dem Anfügen der Verstärkungsteile 6,7 und des Einsatzteils 11 an das Basisteil 4 wird die so hergestellte Innenschale 3 mit der Außenschale 2 zur Motorhaube 1 gefügt. Um einen festen Verbund des wölbstrukturierten Einsatzteils 11 mit der Außenschale 2 zu erreichen, werden die nach oben abragenden Beulenkuppen 20 der Wölbstruktur 12 des Einsatzteils 11 mit der gegenüberliegenden Innenseite 21 der Außenschale 2 verklebt. Wie aus Figur 3 ersichtlich ist, entsteht dabei im Bereich des Einsatzteils 11 ein Blechverbund, dessen effektive Dicke 22 durch die Blechdicken der Außenschale 2 und des Einsatzteils 11 sowie durch die Wölbhöhe 14 der Wölbstruktur 12 bestimmt ist. Da die Wölbstrukturierung - verglichen mit einer herkömmlich verwendeten Versickung - eine sehr geringe Wölbhöhe 14 aufweist, ist auch die effektive Dicke 22 der Motorhaube 1 in diesein Aufprallbereich 15 wesentlich geringer als bei den herkömmlichen, durch Sicken versteiften, Motorhauben: So ragen bei Blechen mit Blechdicken von 0.7 mm bis 1.2 mm, die typischerweise für die Innenschale 3 zum Einsatz kommen, die Beulen bei Wabengrößen von 25 - 50 mm nur etwa 2 - 4 mm aus der Materialbahn heraus. Dies hat zur Folge, daß die effektive lichte Höhe 23, die zwischen der Innenseite 24 der Motorhaube 1 und den (in Figur 3 gestrichelt angedeuteten) Aggregaten 25 des Motorblocks vorliegt, durchgängig wesentlich größer ist als bei Verwendung einer herkömmlichen versickten Motorhaube. Dieser Gewinn an lichter Höhe 23 hat eine Erhöhung des Deformationswegs zur Folge, den die Motorhaube 1 im Fall eines Fußgängeraufpralls zurücklegen kann, bevor die Motorhaube 1 auf die Aggregate 25 auftrifft. Somit bietet die erfindungsgemäße Motorhaube 1 mit einer bereichsweise wölbstrukturierten Innenschale 3 einerseits eine besonders homogene Kraftbelastung über den Aufprallbereich 15 hinweg, andererseits ermöglicht sie - bei fest vorgegebener Anordnung der Motorraumaggregate 25 und der Außenhaut 2 der Motorhaube 1 - einen besonders großen freien Verformungsweg 23. Somit ist mit der erfindungsgemäßen Gestaltung der Motorhaube 1 ein besserer Schutz des Fußgängers bei einem Aufprall auf das Fahrzeug erreichbar.

Neben der oben beschriebenen Gestaltung der Innenschale 3 als ein Zusammenbau aus einem tiefgezogenen Basisteil 4 und einem wölbstrukturierten Einsatzteil 11 kann die Innenschale 3 auch als Ganzes aus einem wölbstrukturierten Rohling hergestellt sein, welcher (unter Verwendung eines Tiefziehverfahrens) im Bereich der Auflagerbereiche 5 und der Ränder 8 in geeigneter Weise geglättet und mit festigkeitserhöhenden Sicken 9 versehen wird. Diese Ausgestaltung der Innenschale 3 erspart zwar den Prozeßschritt des Einklebens des (separat gefertigten) Einsatzteils; allerdings stellt das großflächige Glätten und Umformen. eines wölbstrukturierten Bleches - wie beispielsweise in der (Patentanmeldung 102 15 12.2-14) beschrieben - hohe Anforderungen an die Auslegung des Ziehwerkzeugs, so daß die Herstellung der Innenschale als einteiliges Bauteil aus einem wölbstrukturierten Blech mit einem erhöhten apparativen Aufwand beim Tiefziehen verbunden ist.

## Patentansprüche

1. Motorhaube für Kraftfahrzeuge, die zum Schutz von Fußgängern bei einer Kollision mit dem Kraftfahrzeug eine deformierbarre Kopfaufprallzone aufweist
- wobei die Motorhaube (1) eine durch die Beplankung gebildete Außenschale (2) und mindestens eine unterhalb der Außenschale (2) angeordnete Innenschale (3) umfasst, die mit der Außenschale (2) verbunden ist,
**dadurch gekennzeichnet,**
**daß** die Innenschale (3) einen Versteifungsbereich (10) aufweist, der mit einer Wölbstruktur (12) versehen ist, wobei die Wölbstruktur (12) durch lokales Falten mit einer nur unwesentlichen Oberflächenvergrößerung des Materials gebildet ist.

2. Motorhaube nach Anspruch 1,
**dadurch gekennzeichnet,**
**daß** der Versteifungsbereich (10) der Innenschale (3) durch ein Einsatzteil (11) mit einer Wölbstruktur (12) gebildet ist, welches in eine Aussparung (10') eines Basisteils (4) der Innenschale (3) eingesetzt und fest mit dem Basisteil (4) verbunden ist.

3. Motorhaube nach Anspruch 2,
**dadurch gekennzeichnet,**
**daß** das Einsatzteil (11) aus einem wölbstrukturierten Halbzeug hergestellt ist, welches randseitig (16) geglättet ist.

4. Motorhaube nach Anspruch 2 oder 3,
**dadurch gekennzeichnet,**
**daß** das Einsatzteil (11) in einem Randbereich (16) mit dem Basisteil (4) der Innenschale (3) verklebt ist.

5. Motorhaube nach einem der vorangehenden Ansprüche,
**dadurch gekennzeichnet,**
**daß** die Wölbstruktur (12) des Versteifungsbereiches Beulenkuppen (20) aufweist, welche in Richtung der Außenschale (2) ausgewölbt sind.

6. Motorhaube nach Anspruch 5,
**dadurch gekennzeichnet,**
**daß** die Beulenkuppen (20) der Wölbstruktur (12) mit der Außenschale (2) verklebt sind.

## Claims

1. Engine hood for motor vehicles which has a deformable head impact zone to protect pedestrians in the event of a collision with the motor vehicle,
- the engine hood (1) comprising an outer shell (2), which is formed by the body panelling, and at least one inner shell (3), which is arranged below the outer shell (2) and is connected to the outer shell (2),
**characterized in that** the inner shell (3) has a stiffening region (10) which is provided with a vaulted structure (12), the vaulted structure (12) being formed by local folding with only an insignificant increase in the surface area of the material.

2. Engine hood according to Claim 1, **characterized in that** the stiffening region (10) of the inner shell (3) is formed by an insert part (11) with a vaulted structure (12), which is fitted into a cutout (10') in a base part (4) of the inner shell (3) and is fixedly connected to the base part (4).

3. The engine hood according to Claim 2, **characterized in that** the insert part (11) is produced from a vault-structured semi-finished product which is smoothed at the edge side (16).

4. The engine hood according to Claim 2 or 3, **characterized in that** the insert part (11) is adhesively bonded to the base part (4) of the inner shell (3) in an edge region (16).

5. The engine hood according to one of the preceding claims, **characterized in that** the vaulted structure (12) of the stiffening region has bulge domes (20) which are vaulted out in the direction of the outer shell (2).

6. The engine hood according to Claim 5, **characterized in that** the bulge domes (20) of the vaulted structure (12) are adhesively bonded to the outer shell (2).

## Revendications

1. Capot moteur pour véhicules automobiles, qui comprend une zone de choc à la tête déformable destinée à protéger les piétons lorsqu'ils entrent en collision avec le véhicule,
- le capot moteur (1) comportant une coque extérieure (2) formée par le revêtement et au moins une coque intérieure (3) disposée au-dessous de la coque extérieure (2), qui est reliée à la coque extérieure (2),
**caractérisé en ce que**
la coque intérieure (3) comprend une zone de renforcement (10) qui est pourvue d'une structure courbée (12), la structure courbée (12) étant formée par un pliage local doté d'un agrandissement superficiel insignifiant du matériau.

2. Capot moteur selon la revendication 1,
**caractérisé en ce que**
la zone de renforcement (10) de la coque intérieure (3) est formée par une partie d'insertion (11) dotée d'une structure courbée (12), laquelle partie est insérée dans un évidement (10') d'une partie de base (4) de la coque intérieure (3) et est reliée fixement à la partie de base (4).

3. Capot moteur selon la revendication 2,
**caractérisé en ce que**
la partie d'insertion (11) est fabriquée à partir d'un demi-moule présentant une structure courbée, lequel est lissé côté latéral (16).

4. Capot moteur selon la revendication 2 ou 3,
**caractérisé en ce que**
la partie d'insertion (11) est collée dans une zone latérale (16) à la partie de base (4) de la coque intérieure (3).

5. Capot moteur selon l'une quelconque des revendications précédentes,
**caractérisé en ce que**
la structure courbée (12) de la zone de renforcement comprend des calottes bosselées (20), lesquelles sont courbées en direction de la coque extérieure (2).

6. Capot moteur selon la revendication 5,
**caractérisé en ce que**
les calottes bosselées (20) de la structure courbée (12) sont collées à la coque extérieure (2).
